# EUROPEAN PATENT SPECIFICATION

(11) **EP 3 185 600 B1**
(45) Date of publication and mention of the grant of the patent: **22.05.2019**
(21) Application number: 14902119.8
(22) Date of filing: 17.09.2014
(51) Int. Cl.: H04W 12/12, H04L 29/06, H04W 36/14, H04W 36/18, H04W 36/30, H04W 36/36

(54) **MOBILE TERMINAL CONTROL METHOD AND MOBILE TERMINAL**
STEUERUNGSVERFAHREN FÜR MOBILES ENDGERÄT SOWIE MOBILES ENDGERÄT
PROCÉDÉ DE COMMANDE D'UN TERMINAL MOBILE ET TERMINAL MOBILE

(43) Date of publication of application: 28.06.2017
(73) Proprietor: Huawei Technologies Co., Ltd., Longgang District Shenzhen, Guangdong 518129 (CN)
(72) Inventor: LU, Henghui, Shenzhen Guangdong 518129 (CN); LONG, Shuiping, Shenzhen Guangdong 518129 (CN)
(74) Representative: Körber, Martin Hans
(86) International application number: PCT/CN2014/086734
(87) International publication number: WO 2016/041160

(56) References cited:
- EP-A1- 1 874 013
- WO-A1-2014/027242
- CN-A- 101 150 821
- CN-A- 103 024 744
- CN-A- 104 023 309
- KR-A- 20070 121 862
- US-A1- 2013 241 729
- US-A1- 2013 326 600

## Description

### TECHNICAL FIELD

Embodiments of the present invention relate to the field of communications technologies, and in particular, to a mobile terminal control method and a mobile terminal.

### BACKGROUND

With development of mobile technologies, various mobile terminals become increasingly popular. For example, common smartphones are applied to various aspects of lives of people. Currently, in addition to obtaining a communications service by using a mobile terminal, a user further expects the mobile terminal to provide different user-friendly services in different usage scenarios. For example, when a usage scenario of the mobile terminal is a conference scenario, the user needs the mobile terminal to remain mute. However, due to negligence of the user, after entering the conference scenario, the user forgets to switch the mobile terminal from a ringing mode to a mute mode, and when receiving a message, the mobile terminal still makes a sound for reminding, thereby bringing inconvenience to the user. In this case, after entering the conference scenario, the user expects the mobile terminal to adaptively switch from the ringing mode to the mute mode. Further, the user usually stores some private information in the mobile terminal, and when the mobile terminal is stolen, disclosure of the private information in the mobile terminal causes an economic loss and a security problem to the user. If the mobile terminal can intelligently learn that the mobile terminal is stolen, and automatically perform an anti-theft operation, security of the user may be effectively ensured.

A prerequisite for an adaptive operation of a mobile terminal is to accurately learn of a usage scenario corresponding to the adaptive operation. To enable the mobile terminal to learn of a current usage scenario, a user of the mobile terminal usually enables a camera of the mobile terminal, so as to capture an image of the current usage scenario. Then, the mobile terminal learns of the current usage scenario according to the captured image, and performs an adaptive operation. However, when the prior art is used to enable a mobile terminal to learn of a usage scenario, a user of the mobile terminal needs to actively enable a camera of the mobile terminal, the mobile terminal cannot automatically determine the usage scenario in a timely manner, and the enabled camera further increases power consumption of the mobile terminal.

EP 1874013 A1 discloses a mobile terminal and method for displaying standby screen according to analysis result of user's behavior. KR 2007/0121862 A discloses a mobile communication terminal and method for being operating on the basis behavior analysis result of user. US 2013/326600 A1 discloses a method for authenticating users based upon an identity footprint. WO 2014/027242 A1 discloses system and methods for mitigating the unauthorized use of a device.

### SUMMARY

Embodiments of the present invention provide a mobile terminal control method and a mobile terminal, used to adaptively perform a corresponding control operation according to a network message received in real time and a correspondence stored in a database, so as to bring convenience to a user.

According to a first aspect, an embodiment of the present invention provides a mobile terminal control method, including:
receiving, by a mobile terminal, at least one network message in a current time period, where the at least one network message is sent by at least one network device;
obtaining, by the mobile terminal according to the network message received in the current time period, a network identifier of the network message received in the current time period;
determining, by the mobile terminal, whether a correspondence between the current time period and the network identifier of the network message received in the current time period complies with a correspondence stored in a database, where the correspondence stored in the database includes a correspondence between a time period and a network identifier that are of a network message received by the mobile terminal before the current time period; and
performing, by the mobile terminal, a corresponding control operation according to a determining result;
before the performing (S 104), by the mobile terminal, a corresponding control operation according to a determining result, if the correspondence between the current time period and the network identifier of the network message received in the current time period does not comply with a correspondence stored in a database, the method further comprising:
   determining, by the mobile terminal, whether the mobile terminal can access a network server;
   determining, by the mobile terminal, whether the mobile terminal is in a missing claiming state by querying a network server if the mobile terminal can access the network server, or performing, by the mobile terminal, identity authentication for a holder of the mobile terminal and determining whether a result of the identity authentication is a failure if the mobile terminal cannot access the network server;
   performing, by the mobile terminal, an anti-theft operation, if the mobile terminal is in a missing claiming state, or the result of the identity authentication is a failure;
   storing, by the mobile terminal, the correspondence between the current time period and the network identifier of the network message received in the current time period into the database, if it is determined that the mobile terminal is not stolen, wherein the mobile terminal is determined being not stolen if the mobile terminal is not in a missing claiming state or the identity authentication of the holder of the mobile terminal is succeed;
   the method further comprising:
      deleting, by the mobile terminal, obsolete information from the database, wherein a correspondence is determined as obsolete information if a difference between a first time point and an objective time point corresponding to the current time period is greater than a preset value, wherein the first time point is the time point which the corresponding network message is received.

With reference to the first aspect, in a first implementation manner, the network device includes a mobile communications base station, and the network identifier includes a cell identity Cell ID.

With reference to the first aspect or the first implementation manner, in a second implementation manner, the network device includes a Wi-Fi access point device, and the network identifier includes a service set identifier SSID.

With reference to any one of the first aspect to the second implementation manner of the first aspect, in a third implementation manner, the network device includes a Bluetooth pairing device, and the network identifier includes Bluetooth device identification.

With reference to any one of the first aspect to the third implementation manner of the first aspect, in a fourth implementation manner, the database further stores a preset operation corresponding to the correspondence stored in the database, and the performing, by the mobile terminal, a corresponding control operation according to a determining result includes:
performing, by the mobile terminal, the preset operation if the determining result is that the correspondence between the current time period and the network identifier of the network message received in the current time period complies with the correspondence stored in the database, where the preset operation is associated with the correspondence stored in the database.

With reference to any one of the first aspect to the fourth implementation manner of the first aspect, in an fifth implementation manner, the database stores the correspondence between the time period and the network identifier in a time sequence manner, or the database stores the correspondence between the time period and the network identifier in a network identifier classification manner.

According to a second aspect, an embodiment of the present invention provides a mobile terminal, including:
a receiving module, configured to receive at least one network message in a current time period, where the at least one network message is sent by at least one network device;
an obtaining module, configured to obtain, according to the network message received in the current time period, a network identifier of the network message received in the current time period;
a determining module, configured to determine whether a correspondence between the current time period and the network identifier of the network message received in the current time period complies with a correspondence stored in a database, where the correspondence stored in the database includes a correspondence between a time period and a network identifier that are of a network message received by the mobile terminal before the current time period; and
an execution module, configured to perform a corresponding control operation according to a determining result, wherein the execution module is specifically configured to perform an anti-theft operation if the determining result is that the correspondence between the current time period and the network identifier of the network message received in the current time period does not comply with the correspondence stored in the database:
   the execution module is specifically configured to: if the determining result is that the correspondence between the current time period and the network identifier of the network message received in the current time period does not comply with the correspondence stored in the database, determine whether the mobile terminal can access a network server, determine whether the mobile terminal is in a missing claiming state by querying the network server if the mobile terminal can access a network server; and
   perform the anti-theft operation if the mobile terminal is in the missing claiming state; and
the execution module is specifically configured to:
   perform identity authentication for a holder of the mobile terminal if the mobile terminal cannot access the network server; and
   perform the anti-theft operation if authentication fails;
wherein the execution module is further configured to: store the correspondence between the current time period and the network identifier of the network message received in the current time period into the database, if it is determined that the mobile terminal is not stolen, wherein the mobile terminal is determined being not stolen if the mobile terminal is not in a missing claiming state or the identity authentication of the holder of the mobile terminal is succeed; and delete obsolete information from the database, wherein a correspondence is determined as obsolete information if a difference between a first time point and an objective time point corresponding to the current time period is greater than a preset value, wherein the first time point is the time point which the corresponding network message is received.

With reference to the second aspect, in a first implementation manner, the anti-theft operation includes at least one of the following operations: displaying specified information, locking the mobile terminal, deleting or encrypting stored user data, performing a positioning operation, or ringing.

With reference to any one of the second aspect to the first implementation manner of the second aspect, in a second implementation manner, the database further stores a preset operation corresponding to the correspondence stored in the database, and the execution module is specifically configured to:
perform the preset operation if the determining result is that the correspondence between the current time period and the network identifier of the network message received in the current time period complies with the correspondence stored in the database, where the preset operation is associated with the correspondence stored in the database.

According to the mobile terminal control method and the mobile terminal that are provided in the embodiments of the present invention, a corresponding control operation may be adaptively performed according to a network message received in real time and a correspondence stored in a database, so as to bring convenience to a user.

### BRIEF DESCRIPTION OF DRAWINGS

To describe the technical solutions in the embodiments of the present invention or the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of Embodiment 1 of a mobile terminal control method according to the present invention;
FIG. 2A and FIG. 2B are a schematic flowchart of Embodiment 2 of a mobile terminal control method according to the present invention;
FIG. 3 is a first schematic diagram of a database according to Embodiment 2 of the present invention;
FIG. 4 is a second schematic diagram of a database according to Embodiment 2 of the present invention;
FIG. 5A and FIG. 5B are a schematic flowchart of Embodiment 3 of a mobile terminal control method according to the present invention;
FIG. 6 is a schematic structural diagram of Embodiment 1 of a mobile terminal according to the present invention; and
FIG. 7 is a schematic structural diagram of Embodiment 2 of a mobile terminal according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

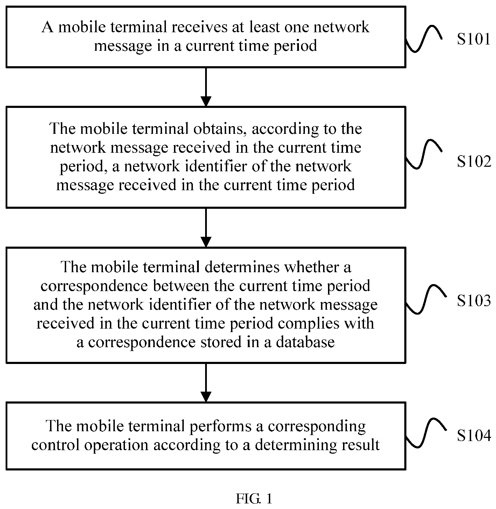

FIG. 1 is a schematic flowchart of Embodiment 1 of a mobile terminal control method according to the present invention. As shown in FIG. 1, this embodiment is executed by a common mobile terminal, such as a smartphone or an iPad. Specifically, this embodiment includes the following steps.

S101. The mobile terminal receives at least one network message in a current time period.

The at least one network message is sent by at least one network device. The at least one network device includes at least one or a combination of the following devices: a mobile communications base station (referred to as a base station in the following), a Wi-Fi access point device, or a Bluetooth pairing device.

The current time period may be a time period with specific duration, for example, a time period from 9:00 to 10:00. In the current time period, the mobile terminal moves from a position A to a position B, and during the movement, the mobile terminal receives a network message sent by a mobile communications base station (one or more) that covers the position A and a network message sent by a mobile communications base station (one or more) that covers the position B. In addition, when a Wi-Fi (Wireless Fidelity, Wireless Fidelity) access point device or a Bluetooth pairing device that may be paired with the mobile terminal exists near the position A and the position B, the mobile terminal further receives a network message sent by the Wi-Fi access point device or the Bluetooth pairing device.

Optionally, the current time period may be divided into a time point. For example, the mobile terminal receives a network message sent by a mobile communications base station (one or more) that covers a cell B at a time point 10:10. The mobile terminal may further receive a network message sent by a Wi-Fi access point device, a Bluetooth pairing device, or the like that is disposed in the cell B.

S102. The mobile terminal obtains, according to the network message received in the current time period, a network identifier of the network message received in the current time period.

A network message carries a network identifier. After receiving the network message, the mobile terminal may obtain the network identifier of the network message. Specifically, if the network device that sends the network message is a mobile communications base station, the network identifier includes a Cell ID (cell identity). If the network device that sends the network message is a Wi-Fi access point device, the network identifier includes an SSID (Service Set Identifier, service set identifier). If the network device that sends the network message is a Bluetooth pairing device, the network identifier includes Bluetooth device identification.

S103. The mobile terminal determines whether a correspondence between the current time period and the network identifier of the network message received in the current time period complies with a correspondence stored in a database.

The correspondence stored in the database includes a correspondence between a time period and a network identifier that are of a network message received by the mobile terminal before the current time period.

It should be noted that the current time period and the time period before the current time period are not objective time. For example, 9:00 on a current day is different from 9:00 on a previous day in terms of objective time. However, when storing a correspondence between a network identifier and a time period, the database stores a correspondence between a network identifier and a time period to which 9:00 belongs. For example, the current time period is 10:00 to 10:10 on the current day, and the time period before the current time period is any one of time periods before 10:00 on the current day. 9:00 and 10:00 on the previous day are used as an example. The mobile terminal is located in a coverage area of a base station 3 and a coverage area of a base station 4 at 9:00 and 10:00 on the previous day respectively, and the mobile terminal receives a network message sent by the base station 3 and a network message sent by the base station 4 at 9:00 and 10:00 on the previous day respectively. A network identifier of the network message sent by the base station 3 is Cell-ID-3, and a network identifier of the network message sent by the base station 4 is Cell-ID-4. Therefore, the correspondence established in the database includes a correspondence between Cell-ID-3 and 9:00, and a correspondence between Cell-ID-4 and 10:00. In addition, the correspondences may reflect a behavior mode of a user of the mobile terminal. Generally, human behavior habits follow a rule. A behavior mode of the user of the mobile terminal may be extracted according to a time period and a network identifier of network information received within a specific time. For example, a behavior mode reflected by the correspondences is that the user carrying the mobile terminal is located in the coverage area of the base station 3 at 9:00 each day, and in the coverage area of the base station 4 at 10:00 each day. Therefore, when a network message whose network identifier is Cell-ID-4 is received at 10:00 on the current day, because the database stores the correspondence between Cell-ID-4 and 10:00, the mobile terminal may determine that Cell-ID-4 and 10:00 on the current day comply with the correspondence between Cell-ID-4 and 10:00 that is stored in the database. Alternatively, when a network message whose network identifier is Cell-ID-5 is received at 10:00 on the current day, because the correspondence stored in the database is Cell-ID-4 corresponding to 10:00, 10:00 on the current day and Cell-ID-5 do not comply with the correspondence in the database.

In addition, "current" in the current time period is a relative concept. That is, when objective time is 10:00 on the current day, 10:00 on the current day is a current time period. However, as the objective time goes by and becomes 11:00 on the current day, 11:00 on the current day is a new current time period.

S104. The mobile terminal performs a corresponding control operation according to a determining result.

When the mobile terminal determines, by performing S103, that the correspondence between the current time period and the network identifier of the network message complies with the correspondence stored in the database, it indicates that the mobile terminal is in a normal scenario, or it may indicate that behavior of a holder of the mobile terminal in the current time period complies with a user behavior mode reflected by the correspondence in the database. In this case, the corresponding control operation may be specifically to remain in a standby state, or may be to perform a corresponding control operation. For example, before the current time period, each time the user enters the coverage area of the base station 3 at 9:00, the user sets the mobile terminal to a vibration mode, and an operation of setting the vibration mode is considered as a control operation corresponding to the correspondence between Cell-ID-3 and 9:00 by the mobile terminal. Therefore, when the current time period is specifically 9:00, after a network message sent by the base station 3 is received, and it is determined that a network identifier Cell-ID-3 of the network message and current 9:00 comply with the correspondence between Cell-ID-3 and 9:00 that is stored in the database, the operation of setting the vibration mode may be performed.

Alternatively, when the mobile terminal determines, by performing S103, that the correspondence between the current time period and the network identifier of the network message does not comply with the correspondence stored in the database, it indicates that the mobile terminal is in an abnormal scenario, that is, behavior of a holder of a mobile phone in the current time period does not comply with a user behavior mode reflected by the correspondence in the database, and the mobile terminal may be stolen. In this case, the holder of the mobile terminal is an unauthorized holder, and a control operation that needs to be adaptively performed is an anti-theft operation. Consequently, the user can conveniently find the lost mobile terminal, or private data in the mobile terminal cannot be stolen, and security and convenience are brought to a life of the user.

In this embodiment, a mobile terminal may adaptively perform a corresponding control operation according to a network message received in real time and a correspondence stored in a database, so as to bring convenience to a user. For example, in an office environment, the user does not need the mobile terminal to ring, and the mobile terminal may be adaptively set to a vibration mode provided that a network message sent by a network device in the office environment is received in a current time period. An extra auxiliary tool such as a camera does not need to be used to determine whether the mobile terminal is in the office environment, and power consumption for enabling the extra auxiliary tool may be saved.

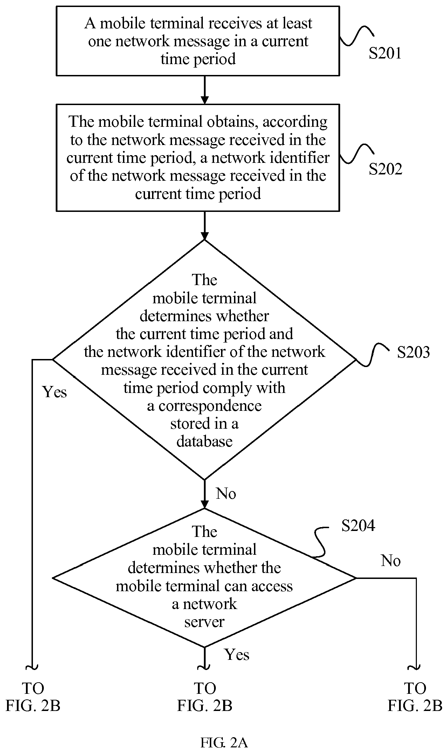

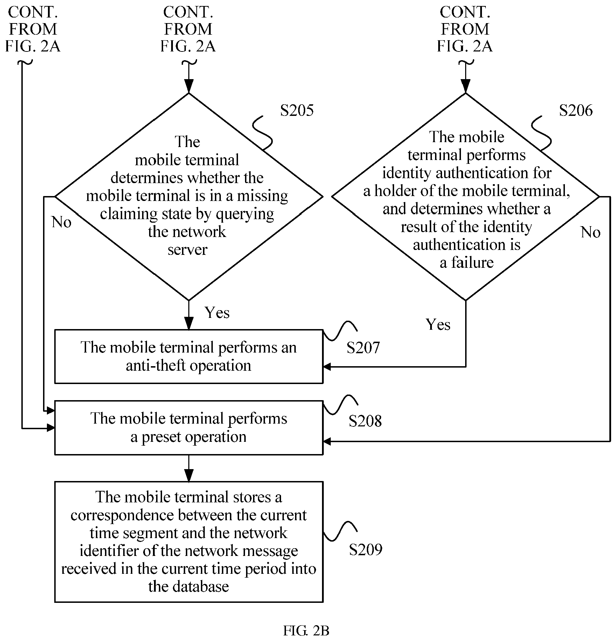

FIG. 2A and FIG. 2B are a schematic flowchart of Embodiment 2 of a mobile terminal control method according to the present invention. As shown in FIG. 2A and FIG. 2B, this embodiment gives further description based on the embodiment shown in FIG 1. Specifically, this embodiment includes the following steps.

S201. The mobile terminal receives at least one network message in a current time period.

S202. The mobile terminal obtains, according to the network message received in the current time period, a network identifier of the network message received in the current time period.

S203. The mobile terminal determines whether the current time period and the network identifier of the network message received in the current time period comply with a correspondence stored in a database. If the current time period and the network identifier of the network message received in the current time period do not comply with the correspondence stored in the database, perform S204. If the current time period and the network identifier of the network message received in the current time period comply with the correspondence stored in the database, perform S208.

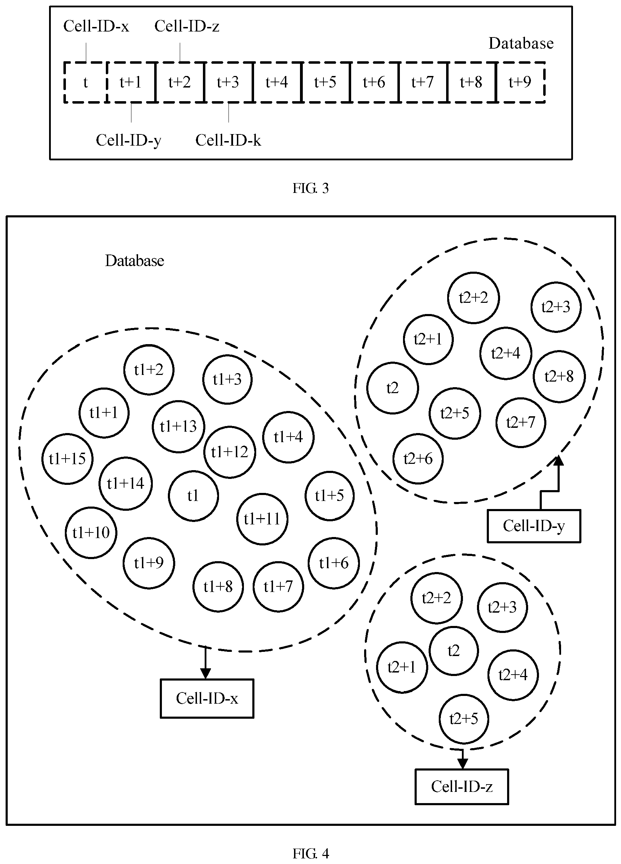

With reference to S103, a correspondence may be extracted according to a time period and a network identifier that are of a network message received by the mobile terminal before the current time period. The correspondence may reflect a behavior mode of a user of the mobile terminal, and there may be at least one correspondence. Specifically, FIG. 3 is a first schematic diagram of the database according to Embodiment 2 of the present invention. As shown in FIG. 3, the mobile terminal receives multiple network messages before the current time period. A network identifier of a network message is specifically a Cell-ID, and a time period in which each network message is received is specifically a time point. For the received multiple network messages, the mobile terminal analyzes, by using a method such as pattern recognition, or machine learning, the time period in which each network message is received and a network identifier of each network message. For example, a network identifier of a network message received in a time period t each day is Cell-ID-x, a network identifier of network information received in a time period t+1 is Cell-ID-y, a network identifier of network information received in a time period t+2 is Cell-ID-z, a network identifier of network information received in a time period t+3 is Cell-ID-k, and by analog, a Cell-ID corresponding to each time period may be determined, that is, multiple correspondences are obtained. In addition, the database of the mobile terminal stores a correspondence between a time period and a network identifier in a time sequence manner. For example, the time period t is before the time period t+1, and therefore, a correspondence between the time period t and Cell-ID-x is arranged before a correspondence between the time period t+1 and Cell-ID-y according to a time sequence.

Alternatively, FIG. 4 is a second schematic diagram of the database according to Embodiment 2 of the present invention. As shown in FIG. 4, for the multiple network messages received before the current time period, the mobile terminal analyzes, by using a method such as pattern recognition, or machine learning, a time point at which each network message is received and a network identifier of each network message. For example, a network message whose network identifier is Cell-ID-x is received in any one of time periods from t1 to t1+15, and a network message whose network identifier is Cell-ID-y is received in any one of time periods from t2 to t2+5. Therefore, Cell-ID-x is corresponding to each time period in t1 to t1+15, and Cell-ID-y is corresponding to each time period in t2 to t2+5. In addition, when storing these correspondences, the database stores a correspondence between a time period and a network identifier in a network identifier classification manner. That is, Cell-ID-x is used as a category, and information included in the Cell-ID-x category is t1 to t1+15. Information included in a Cell-ID-y category is t2 to t2+5.

Further, when S203 is performed, the current time period may be a time point, for example, 10:10, and a network message whose network identifier is Cell-ID-x is received at 10:10. Therefore, the correspondence between the current time period and the network identifier of the network message received in the current time period is a correspondence between Cell-ID-x and 10:10. In the database shown in FIG. 3, if there is Cell-ID-x, and the time period t corresponding to Cell-ID-x is specifically a time period to which 10:10 belongs, or in the database shown in FIG. 4, there is a Cell-ID-x category, and a time period to which 10:10 belongs is in all time periods in the Cell-ID-x category, it indicates that the correspondence between the current time period and the network identifier of the network message received in the current time period complies with the correspondence stored in the database. However, if there is no Cell-ID-x in the database or 10:10 in the time period corresponding to Cell-ID-x, it indicates that the correspondence between the current time period and the network identifier of the network message received in the current time period does not comply with the correspondence stored in the database.

In addition, the time period may be specifically a time period with specific duration, for example, t indicates a time period from 10:00 to 10:10. Alternatively, the time period may be specifically a time point, that is, t indicates 10:10.

Optionally, when S203 is performed, the current time period may be a time period with specific duration, for example, from 10:10 to 10:20, and at least one network message is received in the current time period. When S203 is performed, specifically, the current time period is divided into multiple precise time periods, and it is determined whether a correspondence between a network identifier of a network message received in each precise time periods and the precise time period complies with multiple correspondences stored in the database. For example, in the time period from 10:10 to 10:20, a network message whose network identifier is Cell-ID-x is received at 10:10, a network message whose network identifier is Cell-ID-y is received at 10:15, and a network message whose network identifier is Cell-ID-z is received at 10:20. Therefore, when S203 is performed, it needs to be determined whether correspondences between the network messages whose network identifiers are Cell-ID-x, Cell-ID-y, and Cell-ID-z and all precise time periods (specifically including a precise time period to which 10:10 belongs, a precise time period to which 10:15 belongs, and a precise time period to which 10:20 belongs) comply with the correspondence between Cell-ID-x and the time period t, the correspondence between Cell-ID-y and the time period t+1, and the correspondence between Cell-ID-z and the time period t+2 that are in the database.

It may be understood that the user behavior mode can change. The user of the mobile terminal may temporarily leave for another place with the mobile terminal. For example, the user should enter a coverage area of a base station y at 10:15, so as to receive a network message that is sent by the base station y and whose network identifier is Cell-ID-y. However, on one day, the user temporarily enters a coverage area of a base station s at 10:15, and a network message whose network identifier is Cell-ID-s is received. Flexibly, a specific error tolerance rate is allowed when the mobile terminal determines, by performing S203, whether the correspondence between the current time period and the network identifier of the network message received in the current time period complies with the correspondence stored in the database. For example, a network message whose network identifier is Cell-ID-x is received at 10:10, a network message whose network identifier is Cell-ID-s is received at 10:15, and a network message whose network identifier is Cell-ID-z is received at 10:20. However, in the correspondences stored in the database, the time period t corresponding to Cell-ID-x is specifically a time period to which 10:10 belongs, and the time period t+1 is a time period to which 10:15 belongs and is corresponding to Cell-ID-y. In this case, in the current time period, a correspondence between a precise time period to which 10:15 belongs and Cell-ID-s does not comply with the correspondence between the time period to which 10:15 belongs and Cell-ID-y that is in the database. However, in the current time period, because both a correspondence between Cell-ID-x and a precise time period to which 10:10 belongs and a correspondence between Cell-ID-z and a precise time period to which 10:20 belongs comply with the correspondences stored in the database, and only the correspondence between the precise time period to which 10:15 belongs and Cell-ID-s does not comply with the correspondence stored in the database, based on a specific error tolerance rate, it may be considered that the correspondence between the current time period and the network identifier of the network message received in the current time period complies with the correspondence stored in the database.

S204. The mobile terminal determines whether the mobile terminal can access a network server. If the mobile terminal can access the network server, perform S205. If the mobile terminal cannot access the network server, perform S206.

It should be noted that in S203, when the correspondence between the current time period and the network identifier of the network message received in the current time period does not comply with the correspondence stored in the database, it indicates that behavior of a holder of the mobile terminal does not comply with the behavior mode of the user of the mobile terminal, the mobile terminal may be stolen, and S207 may be immediately performed. That is, the mobile terminal immediately performs an anti-theft operation provided that a determining result in S203 is that the correspondence between the current time period and the network identifier of the network message received in the current time period does not comply with the correspondence stored in the database. However, to improve accuracy of determining whether the mobile terminal is stolen, and avoid triggering the anti-theft operation when it is determined by mistake that the mobile terminal is stolen, after the mobile terminal preliminarily determines that the mobile terminal may be stolen, final confirmation needs to be performed, that is, S204 to S206 need to be further performed.

There may be two types of methods for performing final confirmation: performing final confirmation by querying a network server online, and performing final confirmation in the mobile terminal locally. Therefore, before final confirmation is performed, whether the mobile terminal can access the network server needs to be determined. That is, whether the mobile terminal can access a network (specifically, a cellular network, a Wi-Fi network, or the like) is determined in S204.

S205. The mobile terminal queries the network server, and determines whether the mobile terminal is in a missing claiming state. If the mobile terminal is in the missing claiming state, perform S207. If the mobile terminal is not in the missing claiming state, perform S208.

Specifically, the user registers the mobile terminal with a network server provided by a brand owner of the mobile terminal, or the user registers, by using an application on the mobile terminal, the mobile terminal with a network server of the application, or registers the mobile terminal with a server of an operator. When the mobile terminal is stolen, the user may access these network servers by using another terminal device, and claim missing of the mobile terminal, so as to find the lost mobile terminal online. After the user claims missing, the network server records that the mobile terminal is in the missing claiming state. When the user searches for the lost mobile terminal, the mobile terminal itself determines whether the mobile terminal is in the missing claiming state by performing S201 to S205.

S206. The mobile terminal performs identity authentication for a holder of the mobile terminal, and determines whether a result of the identity authentication is a failure. If the result of the identity authentication is a failure, perform S207. If the result of the identity authentication is not a failure, perform S208.

An operation of the identity authentication includes at least one of the following operations: password authentication, pattern unlocking, biometric recognition, or the like. The biometric recognition may be specifically fingerprint recognition, face recognition, voiceprint recognition, or the like.

S207. The mobile terminal performs an anti-theft operation.

The anti-theft operation includes at least one of the following operations:
The mobile terminal displays specified information, the mobile terminal locks the mobile terminal, the mobile terminal deletes or encrypts stored user data, the mobile terminal rings for alerting, the mobile terminal enables a camera to take a photo, and sends the photo the network server, or the mobile terminal performs a positioning operation, and sends positioning information to the network server.

Specifically, the specified information may be set by the user, for example, "please call 135xxxxxxxx if you pick up this mobile phone". After the mobile terminal is locked, the mobile terminal cannot be normally used. To prevent disclosure of private information of the user due to a loss of the mobile terminal, the mobile terminal itself may delete the user data stored in the mobile terminal, or may encrypt the stored user data. More preferably, to help the user find the mobile terminal as soon as possible, the mobile terminal may perform the positioning operation, and send the positioning information obtained by performing the positioning operation to the network server. In addition, the mobile terminal may enable the camera to take a photo of an unauthorized holder of the mobile terminal.

S208. The mobile terminal performs a preset operation.

The preset operation is associated with the correspondence stored in the database.

Specifically, when it is determined that the correspondence between the current time period and the network identifier of the network message received in the current time period complies with the correspondence stored in the database, it indicates that the mobile terminal is in a normal scenario, or it may indicate that behavior of a holder of the mobile terminal in the current time period complies with a user behavior mode reflected by the correspondence in the database. In this case, the corresponding control operation may be specifically to remain in a standby state, or may be to perform a corresponding control operation. For example, before the current time period, each time the user enters a coverage area of a base station 3 at 9:00, the user receives a network message whose network identifier is Cell-ID-3, and sets the mobile terminal to a vibration mode. The mobile terminal uses an operation of setting the vibration mode as a preset operation, makes a record, and associates the preset operation with a correspondence between Cell-ID-3 and 9:00. Therefore, in the current time period, that is, 9:00 on a current day, after a network message sent by the base station 3 is received, and it is determined that a network identifier Cell-ID-3 of the network message and current 9:00 comply with the correspondence between Cell-ID-3 and 9:00 that is stored in the database, the operation of setting the vibration mode may be performed.

Optionally, the preset operation may be an operation such as connecting the mobile terminal to a Wi-Fi access point, or notifying the user of arriving at a station.

It should be noted that if it is determined by performing S203 that the current time period and the network identifier of the network message received in the current time period do not comply with the correspondence stored in the database, S208 is immediately performed. If it is determined, by performing S205, that the mobile terminal is not in the missing claiming state, or it is determined, by performing S206, that authentication of the holder of the mobile terminal succeeds, S208 may not be performed. Specifically, when the user travels on business with the mobile terminal, an identifier of a network message received in the time period t+3 is Cell-ID-p instead of Cell-ID-k. In this case, even if it is determined, by performing S204 or S205, that the mobile terminal is not stolen, a correspondence between Cell-ID-p and t+3 is not in the database, and there is no preset operation, or in other words, the preset operation in this case is to remain in a standby state.

Optionally, to update the correspondence in the database in a timely manner, and ensure accuracy of determining by the mobile terminal, S209 may be further performed after S208 is performed or after it is determined that the mobile terminal is not stolen in S204 or S205.

S209. The mobile terminal stores the correspondence between the current time period and the network identifier of the network message received in the current time period into the database.

If the network message received in the current time period is a network message received by the mobile terminal for the first time, the correspondence between the current time period and the network identifier of the network message received in the current time period is stored into the database, that is, a database is established. As time goes by, each time a network message is received in a new current time period and it is determined that the mobile terminal is not stolen, the database is updated according to a network identifier of the network message received in the new current time period and the new current time period. As increasingly more correspondences are stored in the database, the mobile terminal more accurately determines whether the mobile terminal is stolen, and convenience is brought to the user.

However, when the correspondence between the network identifier of the network message received in the current time period and the current time period does not comply with the correspondence stored in the database, and it is determined, by querying the network server or after performing identity authentication for the holder of the mobile terminal, that the mobile terminal is stolen, the network message received in the current time period is discarded. That is, the database is not updated according to the network identifier of the network message received in the current time period and the current time period.

It should be additionally noted that when the database is continuously updated, obsolete information needs to be further removed. For example, a correspondence is determined according to a network message received in a first time point (an objective time point, for example, 9:00 in 30 previous days) before the current time period and the first time point. A difference between the first time point and an objective time point (that is, 9:00 on a current day) corresponding to the current time period is greater than α (a preset value), for example, α is 30 days. Therefore, the correspondence is determined as obsolete information, and the mobile terminal deletes the obsolete information.

In this embodiment, a mobile terminal may adaptively perform a corresponding control operation according to a network message received in real time and a correspondence stored in a database, so as to bring convenience to a user. For example, in an office environment, the user does not need the mobile terminal to ring, and the mobile terminal may be adaptively set to a vibration mode provided that a network message sent by a network device in the office environment is received in a current time period. An extra auxiliary tool such as a camera does not need to be used to determine whether the mobile terminal is in the office environment, and power consumption for enabling the extra auxiliary tool may be saved. In addition, before the mobile terminal finally determines that the mobile terminal is stolen, whether the mobile terminal is stolen is determined by querying a network server or by using an identity authentication operation of the mobile terminal itself, thereby improving accuracy of performing the corresponding control operation by the mobile terminal.

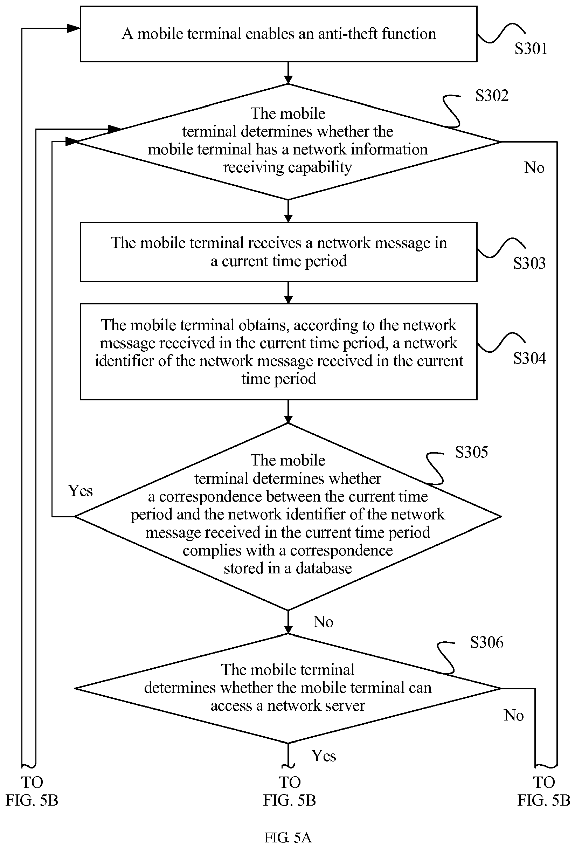

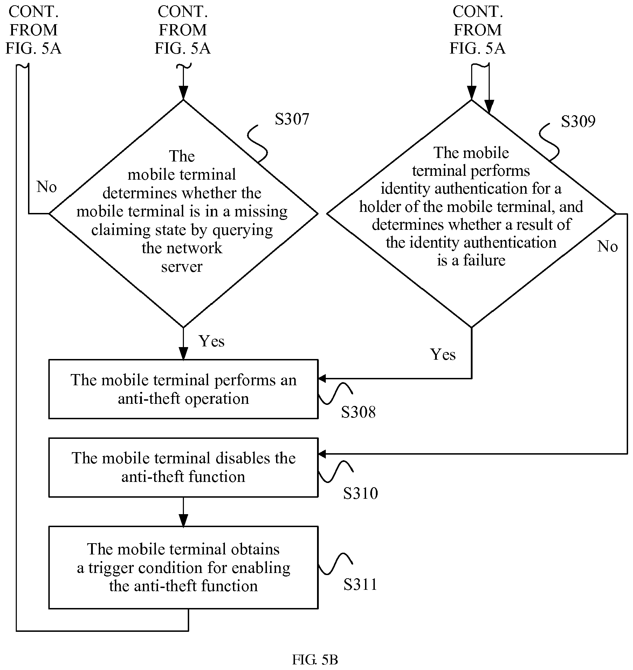

FIG. 5A and FIG. 5B are a schematic flowchart of Embodiment 3 of a mobile terminal control method according to the present invention. As shown in FIG. 5A and FIG. 5B, based on the embodiment shown in FIG. 1 or FIG. 2A and FIG. 2B, performing an anti-theft operation is used as a service function of the mobile terminal, and more detailed description is provided in this embodiment. Specifically, this embodiment includes the following steps.

S301. The mobile terminal enables an anti-theft function.

After enabling the anti-theft function, the mobile terminal may perform S302 to S311 in real time, and may immediately perform an anti-theft operation after finding, in a timely manner, that the mobile terminal is stolen. To prevent an unauthorized person from disabling the anti-theft function in the mobile terminal in a manner such as a factory reset manner, code for implementing the anti-theft function is written to an operating system of the mobile terminal or programmed into an ROM (Read-Only Memory, read-only memory) of the mobile terminal.

S302. The mobile terminal determines whether the mobile terminal has a network information receiving capability. If the mobile terminal has the network information receiving capability, perform S303. If the mobile terminal does not have the network information receiving capability, perform S309.

A common smartphone is used as an example. Whether the mobile terminal has a network information receiving capability may be determined by determining whether the mobile phone is in an airplane mode. When it is determined whether the mobile phone is in an airplane mode, the mobile phone may obtain a determining result from system data. For example, in an Android operating system, whether the mobile phone is in an airplane mode may be determined by using the following function (in a JAVA language): boolean isEnabled = Settings.System.getInt(getContentResolver(),Settings.System.AIRPLANE_MODE_ON,0) == 1.

When a result of the function is True, it indicates that the mobile phone is in the airplane mode, and the mobile phone waits to receive network information, that is, perform S309. When the result is False, it indicates that the mobile phone is not in the airplane mode, and the mobile phone waits to perform S303.

S303. The mobile terminal receives a network message in a current time period.

S304. The mobile terminal obtains, according to the network message received in the current time period, a network identifier of the network message received in the current time period.

S305. The mobile terminal determines whether a correspondence between the current time period and the network identifier of the network message received in the current time period complies with a correspondence stored in a database. If the correspondence between the current time period and the network identifier of the network message received in the current time period does not comply with the correspondence stored in the database, perform S306. If the correspondence between the current time period and the network identifier of the network message received in the current time period complies with the correspondence stored in the database, go back to S302 (or wait to perform S303 without performing S302).

For example, the network message is base station information sent by a base station. When the base station information is received, in an Android operating system, a network identifier in the base station information may be obtained by using a function (in a JAVA language) NetworkInfo getNetworkInfo(int networkType), and networkType=TYPE_MOBILE is input.

S306. The mobile terminal determines whether the mobile terminal can access a network server. If the mobile terminal can access the network server, perform S307. If the mobile terminal cannot access the network server, perform S309.

S307. The mobile terminal determines whether the mobile terminal is in a missing claiming state by querying the network server. If the mobile terminal is in the missing claiming state, perform S308. If the mobile terminal is not in the missing claiming state, perform S302 (or wait to perform S303 without performing S302).

S308. The mobile terminal performs an anti-theft operation.

S309. The mobile terminal performs identity authentication for a holder of the mobile terminal, and determines whether a result of the identity authentication is a failure. If the result of the identity authentication is a failure, perform S308. If the result of the identity authentication is not a failure, perform S310.

S310. The mobile terminal disables the anti-theft function.

After it is determined, by performing S309, that the holder of the mobile terminal is still an authorized user of the mobile terminal, it may be figured out that the mobile terminal is still possessed by the authorized user in a near future. To avoid interference to the user due to frequent identity authentication for the user, the anti-theft function may be disabled in the near future.

S311. If the mobile terminal obtains a trigger condition for enabling the anti-theft function, go back to S301.

After the mobile terminal disables the anti-theft function, the mobile terminal performs monitoring. When the mobile terminal obtains the trigger condition for enabling the anti-theft function, immediately go back to S301, and perform anti-theft protection for the mobile terminal. The trigger condition for enabling the anti-theft function may be preset by the user by using the mobile terminal. For example, the trigger condition is preset duration. That is, after the mobile terminal performs S310, the mobile terminal starts a timer, and when the mobile terminal determines that the timer with the preset duration expires, the mobile terminal obtains the trigger condition for enabling the anti-theft function.

It should be additionally noted that, in this embodiment, in a process of going back to S302 (or waiting to perform S303) after performing S305, the mobile terminal considers that the mobile terminal is not stolen, and the mobile terminal may further perform S208 and/or S209 in the foregoing embodiment. Similarly, in a process of going back to S302 (or waiting to perform S303) after performing S307, the mobile terminal may further perform S209 in the foregoing embodiment. In addition, when performing S308 to S310, the mobile terminal may further perform S209 in the foregoing embodiment.

In this embodiment, a mobile terminal determines a usage scenario of the mobile terminal in a current time point according to network information received in real time and obtained historical network information, and further determines, by querying a network server or by using an identity authentication operation of the mobile terminal itself, whether the mobile terminal is in an abnormal scenario before the mobile terminal finally determines that the usage scenario is the abnormal scenario. Therefore, the usage scenario is more accurately determined, and use security of the mobile terminal of a user is effectively ensured.

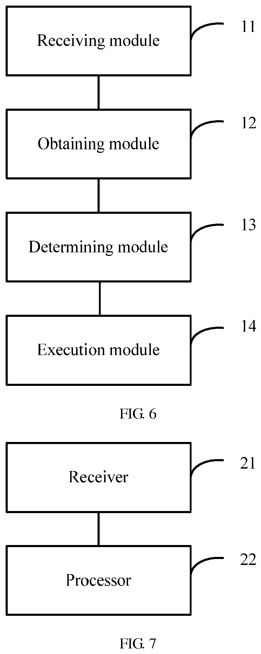

FIG. 6 is a schematic structural diagram of Embodiment 1 of a mobile terminal according to the present invention. As shown in FIG. 6, the mobile terminal includes:
a receiving module 11, configured to receive at least one network message in a current time period, where the at least one network message is sent by at least one network device;
an obtaining module 12, configured to obtain, according to the network message received in the current time period, a network identifier of the network message received in the current time period;
a determining module 13, configured to determine whether a correspondence between the current time period and the network identifier of the network message received in the current time period complies with a correspondence stored in a database, where the correspondence stored in the database includes a correspondence between a time period and a network identifier that are of a network message received by the mobile terminal before the current time period; and
an execution module 14, configured to perform a corresponding control operation according to a determining result.

Optionally, the network device includes a mobile communications base station, and the network identifier includes a cell identity Cell ID.

Optionally, the network device includes a Wi-Fi access point device, and the network identifier includes a service set identifier SSID.

Optionally, the network device includes a Bluetooth pairing device, and the network identifier includes Bluetooth device identification.

Further, the execution module 14 is specifically configured to: if the determining result is that the correspondence between the current time period and the network identifier of the network message received in the current time period does not comply with the correspondence stored in the database, determine whether the mobile terminal is in a missing claiming state by querying a network server; and
perform an anti-theft operation if the mobile terminal is in the missing claiming state.

Further, the execution module 14 is specifically configured to perform an anti-theft operation if the determining result is that the correspondence between the current time period and the network identifier of the network message received in the current time period does not comply with the correspondence stored in the database.

Further, the execution module 14 is specifically configured to:
perform identity authentication for a holder of the mobile terminal if the determining result is that the correspondence between the current time period and the network identifier of the network message received in the current time period does not comply with the correspondence stored in the database; and
perform an anti-theft operation if authentication fails.

Further, the determining module 13 is further configured to determine whether the mobile terminal has a network information receiving capability; and
if the mobile terminal does not have the network information receiving capability, the mobile terminal performs identity authentication for a holder of the mobile terminal; and
performs an anti-theft operation if authentication fails.

Further, the identity authentication includes at least one of the following:
password authentication, pattern unlocking, or biometric feature recognition.

Further, the anti-theft operation includes at least one of the following operations: displaying specified information, locking the mobile terminal, deleting or encrypting stored user data, performing a positioning operation, or ringing.

Further, the database further stores a preset operation corresponding to the correspondence stored in the database, and the execution module 14 is specifically configured to:
perform the preset operation if the determining result is that the correspondence between the current time period and the network identifier of the network message received in the current time period complies with the correspondence stored in the database. The preset operation is associated with the correspondence stored in the database.

Further, the database stores the correspondence between the time period and the network identifier in a time sequence manner, or the database stores the correspondence between the time period and the network identifier in a network identifier classification manner.

In this embodiment, a mobile terminal may adaptively perform a corresponding control operation according to a network message received in real time and a correspondence stored in a database, so as to bring convenience to a user. For example, in an office environment, the user does not need the mobile terminal to ring, and the mobile terminal may be adaptively set to a vibration mode provided that a network message sent by a network device in the office environment is received in a current time period. An extra auxiliary tool such as a camera does not need to be used to determine whether the mobile terminal is in the office environment, and power consumption for enabling the extra auxiliary tool may be saved.

It should be noted that the modules correspondingly perform steps in the foregoing method embodiments. For a specific execution process and a technical effect, refer to the steps in the foregoing method embodiments.

FIG. 7 is a schematic structural diagram of Embodiment 2 of a mobile terminal according to the present invention. As shown in FIG. 7, the mobile terminal includes:
a receiver 21, configured to receive at least one network message in a current time period, where the at least one network message is sent by at least one network device; and
a processor 22, configured to obtain, according to the network message received in the current time period, a network identifier of the network message received in the current time period;
determine whether a correspondence between the current time period and the network identifier of the network message received in the current time period complies with a correspondence stored in a database, where the correspondence stored in the database includes a correspondence between a time period and a network identifier that are of a network message received by the mobile terminal before the current time period; and
perform a corresponding control operation according to a determining result.

Optionally, the network device includes a mobile communications base station, and the network identifier includes a cell identity Cell ID.

Optionally, the network device includes a Wi-Fi access point device, and the network identifier includes a service set identifier SSID.

Optionally, the network device includes a Bluetooth pairing device, and the network identifier includes Bluetooth device identification.

Further, the processor 22 is specifically configured to: if the determining result is that the correspondence between the current time period and the network identifier of the network message received in the current time period does not comply with the correspondence stored in the database, determine whether the mobile terminal is in a missing claiming state by querying a network server; and
perform an anti-theft operation if the mobile terminal is in the missing claiming state.

Further, the processor 22 is specifically configured to perform an anti-theft operation if the determining result is that the correspondence between the current time period and the network identifier of the network message received in the current time period does not comply with the correspondence stored in the database.

Further, the processor is specifically configured to:
perform identity authentication for a holder of the mobile terminal if the determining result is that the correspondence between the current time period and the network identifier of the network message received in the current time period does not comply with the correspondence stored in the database; and
perform an anti-theft operation if authentication fails.

Further, the processor 22 is further configured to determine whether the mobile terminal has a network information receiving capability; and
if the mobile terminal does not have the network information receiving capability, the mobile terminal performs identity authentication for a holder of the mobile terminal; and
performs an anti-theft operation if authentication fails.

Further, the identity authentication includes at least one of the following:
password authentication, pattern unlocking, or biometric feature recognition.

Further, the anti-theft operation includes at least one of the following operations: displaying specified information, locking the mobile terminal, deleting or encrypting stored user data, performing a positioning operation, or ringing.

Further, the database further stores a preset operation corresponding to the correspondence stored in the database, and the processor 22 is specifically configured to:
perform the preset operation if the determining result is that the correspondence between the current time period and the network identifier of the network message received in the current time period complies with the correspondence stored in the database. The preset operation is associated with the correspondence stored in the database.

Further, the database stores the correspondence between the time period and the network identifier in a time sequence manner, or the database stores the correspondence between the time period and the network identifier in a network identifier classification manner.

In this embodiment, a mobile terminal may adaptively perform a corresponding control operation according to a network message received in real time and a correspondence stored in a database, so as to bring convenience to a user. For example, in an office environment, the user does not need the mobile terminal to ring, and the mobile terminal may be adaptively set to a vibration mode provided that a network message sent by a network device in the office environment is received in a current time period. An extra auxiliary tool such as a camera does not need to be used to determine whether the mobile terminal is in the office environment, and power consumption for enabling the extra auxiliary tool may be saved.

It should be noted that the receiver and processor correspondingly perform steps in the foregoing method embodiments. For a specific execution process and a technical effect, refer to the steps in the foregoing method embodiments.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A mobile terminal control method, comprising:
receiving (S101, S201, S303), by a mobile terminal, at least one network message in a current time period, wherein the at least one network message is sent by at least one network device;
obtaining (S102, S202, S304), by the mobile terminal according to the network message received in the current time period, a network identifier of the network message received in the current time period;
determining (S103, S203, S305), by the mobile terminal, whether a correspondence between the current time period and the network identifier of the network message received in the current time period complies with a correspondence stored in a database, wherein the correspondence stored in the database comprises a correspondence between a time period and a network identifier that are of a network message received by the mobile terminal before the current time period; and
performing (S104), by the mobile terminal, a corresponding control operation according to a determining result;
before the performing (S104), by the mobile terminal, a corresponding control operation according to a determining result, if the correspondence between the current time period and the network identifier of the network message received in the current time period does not comply with a correspondence stored in a database, the method further comprising:
determining (S204, S306), by the mobile terminal, whether the mobile terminal can access a network server;
determining (S205, S307), by the mobile terminal, whether the mobile terminal is in a missing claiming state by querying the network server if the mobile terminal can access the network server, or
performing (S206, S309), by the mobile terminal, identity authentication for a holder of the mobile terminal and determining whether a result of the identity authentication is a failure if the mobile terminal cannot access the network server;
performing (S207, S308), by the mobile terminal, an anti-theft operation, if the mobile terminal is in a missing claiming state, or the result of the identity authentication is a failure;
storing (S209), by the mobile terminal, the correspondence between the current time period and the network identifier of the network message received in the current time period into the database, if it is determined that the mobile terminal is not stolen, wherein the mobile terminal is determined being not stolen if the mobile terminal is not in a missing claiming state or the identity authentication of the holder of the mobile terminal is succeed;
the method further comprising:
deleting, by the mobile terminal, obsolete information from the database, wherein a correspondence is determined as obsolete information if a difference between a first time point and an objective time point corresponding to the current time period is greater than a preset value, wherein the first time point is the time point which the corresponding network message is received.

2. The control method according to claim 1, wherein the network device comprises a mobile communications base station, and the network identifier comprises a cell identity, Cell ID.

3. The control method according to claim 1 or 2, wherein the network device comprises a Wi-Fi access point device, and the network identifier comprises a service set identifier, SSID.

4. The control method according to any one of claims 1 to 3, wherein the network device comprises a Bluetooth pairing device, and the network identifier comprises Bluetooth device identification.

5. The control method according to any one of claims 1 to 4, wherein the database further stores a preset operation corresponding to the correspondence stored in the database, and the performing (S104), by the mobile terminal, a corresponding control operation according to a determining result comprises:
performing (S208), by the mobile terminal, the preset operation if the determining result is that the correspondence between the current time period and the network identifier of the network message received in the current time period complies with the correspondence stored in the database, wherein the preset operation is associated with the correspondence stored in the database.

6. The control method according to any one of claims 1 to 5, wherein the database stores the correspondence between the time period and the network identifier in a time sequence manner, or the database stores the correspondence between the time period and the network identifier in a network identifier classification manner.

7. A mobile terminal, comprising:
a receiving module (11), configured to receive at least one network message in a current time period, wherein the at least one network message is sent by at least one network device;
an obtaining module (12), configured to obtain, according to the network message received in the current time period, a network identifier of the network message received in the current time period;
a determining module (13), configured to determine whether a correspondence between the current time period and the network identifier of the network message received in the current time period complies with a correspondence stored in a database, wherein the correspondence stored in the database comprises a correspondence between a time period and a network identifier that are of a network message received by the mobile terminal before the current time period; and
an execution module (14), configured to perform a corresponding control operation according to a determining result;
wherein the execution module (14) is specifically configured to: if the determining result is that the correspondence between the current time period and the network identifier of the network message received in the current time period does not comply with the correspondence stored in the database, determine whether the mobile terminal can access a network server, determine whether the mobile terminal is in a missing claiming state by querying the network server if the mobile terminal can access the network server, and
perform the anti-theft operation if the mobile terminal is in the missing claiming state; or
perform identity authentication for a holder of the mobile terminal if the mobile terminal cannot access the network server; and
perform the anti-theft operation if authentication fails;
wherein the execution module (14) is further configured to: store the correspondence between the current time period and the network identifier of the network message received in the current time period into the database, if it is determined that the mobile terminal is not stolen, wherein the mobile terminal is determined being not stolen if the mobile terminal is not in a missing claiming state or the identity authentication of the holder of the mobile terminal is succeed; and delete obsolete information from the database, wherein a correspondence is determined as obsolete information if a difference between a first time point and an objective time point corresponding to the current time period is greater than a preset value, wherein the first time point is the time point which the corresponding network message is received.

8. The mobile terminal according to claim 7, wherein the anti-theft operation comprises at least one of the following operations: displaying specified information, locking the mobile terminal, deleting or encrypting stored user data, performing a positioning operation, or ringing.

9. The mobile terminal according to any one of claims 7 to 8, wherein the database further stores a preset operation corresponding to the correspondence stored in the database, and the execution module is specifically configured to:
perform the preset operation if the determining result is that the correspondence between the current time period and the network identifier of the network message received in the current time period complies with the correspondence stored in the database, wherein the preset operation is associated with the correspondence stored in the database.

## Patentansprüche

1. Steuerverfahren für ein mobiles Endgerät, das Folgendes umfasst:
Empfangen (S101, S201, S303) mindestens einer Netzwerknachricht in einer aktuellen Zeitperiode durch ein mobiles Endgerät, wobei die mindestens eine Netzwerknachricht von mindestens einer Netzwerkvorrichtung gesendet wird;
Erhalten (S102, S202, S304) einer Netzwerkkennung der Netzwerknachricht, die in der aktuellen Zeitperiode empfangen wurde, gemäß der in der aktuellen Zeitperiode empfangenen Netzwerknachricht durch das mobile Endgerät;
Bestimmen (S103, S203, S305) durch das mobile Endgerät, ob eine Entsprechung zwischen der aktuellen Zeitperiode und der Netzwerkkennung der Netzwerknachricht, die in der aktuellen Zeitperiode empfangen wurde, mit einer in einer Datenbank gespeicherten Entsprechung konform ist, wobei die in der Datenbank gespeicherte Entsprechung eine Entsprechung zwischen einer Zeitperiode und einer Netzwerkkennung, die zu einer Netzwerknachricht gehören, die vom mobilen Endgerät vor der aktuellen Zeitperiode empfangen wurde, umfasst; und
Durchführen (S104) eines entsprechenden Steuervorgangs gemäß einem Bestimmungsergebnis durch das mobile Endgerät;
wobei, wenn die Entsprechung zwischen der aktuellen Zeitperiode und der Netzwerkkennung der Netzwerknachricht, die in der aktuellen Zeitperiode empfangen wurde, mit einer in einer Datenbank gespeicherten Entsprechung nicht konform ist, das Verfahren vor dem Durchführen (S104) eines entsprechenden Steuervorgangs gemäß einem Bestimmungsergebnis durch das mobile Endgerät ferner Folgendes umfasst:
Bestimmen (S204, S306) durch das mobile Endgerät, ob das mobile Endgerät auf ein Netzwerkserver zugreifen kann;
Bestimmen (S205, S307) durch das mobile Endgerät durch Abfragen des Netzwerkservers, ob das mobile Endgerät auf den Netzwerkserver zugreifen kann, ob sich das mobile Endgerät in einem vorgebrachten Fehlzustand befindet, oder
Durchführen (S206, S309) durch das mobile Endgerät einer Identitätsauthentifizierung für einen Halter des mobilen Endgeräts und Bestimmen, ob ein Ergebnis der Identitätsauthentifizierung ein Fehler ist, wenn das mobile Endgerät nicht auf den Netzwerkserver zugreifen kann;
Durchführen (S207, S308) eines Antidiebstahlvorgangs durch das mobile Endgerät, wenn sich das mobile Endgerät in einem vorgebrachten Fehlzustand befindet oder das Ergebnis der Identitätsauthentifizierung ein Fehler ist;
Speichern (S209) der Entsprechung zwischen der aktuellen Zeitperiode und der Netzwerkkennung der Netzwerknachricht, die in der aktuellen Zeitperiode empfangen wurde, durch das mobile Endgerät in der Datenbank, wenn bestimmt wird, dass das mobile Endgerät nicht gestohlen wurde, wobei bestimmt wird, dass das mobile Endgerät nicht gestohlen wurde, wenn sich das mobile Endgerät nicht in einem vorgebrachten Fehlzustand befindet oder die Identitätsauthentifizierung des Halters des mobilen Endgeräts erfolgreich ist;
wobei das Verfahren ferner Folgendes umfasst:
Löschen von veralteten Informationen aus der Datenbank durch das mobile Endgerät, wobei bestimmt wird, dass eine Entsprechung eine veraltete Information ist, wenn eine Differenz zwischen einem ersten Zeitpunkt und einem objektiven Zeitpunkt, der der aktuellen Zeitperiode entspricht, größer ist als ein voreingestellter Wert, wobei der erste Zeitpunkt der Zeitpunkt ist, zu dem die entsprechende Netzwerknachricht empfangen wurde.

2. Steuerverfahren nach Anspruch 1, wobei die Netzwerkvorrichtung eine Basisstation für die mobile Kommunikation umfasst und die Netzwerkkennung eine Zellidentität, Zell-ID, umfasst.

3. Steuerverfahren nach Anspruch 1 oder 2, wobei die Netzwerkvorrichtung eine Wi-Fi-Zugangspunktvorrichtung umfasst und die Netzwerkkennung eine Dienstsatzkennung, SSID, umfasst.

4. Steuerverfahren nach einem der Ansprüche 1 bis 3, wobei die Netzwerkvorrichtung eine Bluetooth-Paarungsvorrichtung umfasst und die Netzwerkkennung eine Bluetooth-Vorrichtungsidentifikation umfasst.

5. Steuerverfahren nach einem der Ansprüche 1 bis 4, wobei in der Datenbank ferner ein voreingestellter Vorgang gespeichert ist, der der in der Datenbank gespeicherten Entsprechung entspricht, und das Durchführen (S104) eines entsprechenden Steuervorgangs gemäß einem Bestimmungsergebnis durch das mobile Endgerät Folgendes umfasst:
Durchführen (S208) des voreingestellten Vorgangs durch das mobile Endgerät, wenn das Bestimmungsergebnis derart ist, dass die Entsprechung zwischen der aktuellen Zeitperiode und der Netzwerkkennung der Netzwerknachricht, die in der aktuellen Zeitperiode empfangen wurde, mit der in der Datenbank gespeicherten Entsprechung konform ist, wobei der voreingestellte Vorgang mit der in der Datenbank gespeicherten Entsprechung verknüpft ist.

6. Steuerverfahren nach einem der Ansprüche 1 bis 5, wobei die Datenbank die Entsprechung zwischen der Zeitperiode und der Netzwerkkennung in einer Zeitsequenzweise speichert oder die Datenbank die Entsprechung zwischen der Zeitperiode und der Netzwerkkennung in einer Netzwerkkennungsklassifizierungsweise speichert.

7. Mobiles Endgerät, das Folgendes umfasst:
ein Empfangsmodul (11), das dazu ausgelegt ist, mindestens eine Netzwerknachricht in einer aktuellen Zeitperiode zu empfangen, wobei die mindestens eine Netzwerknachricht von mindestens einer Netzwerkvorrichtung gesendet wird;
ein Erhaltungsmodul (12), das dazu ausgelegt ist, eine Netzwerkkennung der Netzwerknachricht, die in der aktuellen Zeitperiode empfangen wurde, gemäß der in der aktuellen Zeitperiode empfangenen Netzwerknachricht zu erhalten;
ein Bestimmungsmodul (13), das dazu ausgelegt ist zu bestimmen, ob eine Entsprechung zwischen der aktuellen Zeitperiode und der Netzwerkkennung der Netzwerknachricht, die in der aktuellen Zeitperiode empfangen wurde, mit einer in einer Datenbank gespeicherten Entsprechung konform ist, wobei die in der Datenbank gespeicherte Entsprechung eine Entsprechung zwischen einer Zeitperiode und einer Netzwerkkennung, die zu einer Netzwerknachricht gehören, die vom mobilen Endgerät vor der aktuellen Zeitperiode empfangen wurde, umfasst; und
ein Ausführungsmodul (14), das dazu ausgelegt ist, einen entsprechenden Steuervorgang gemäß einem Bestimmungsergebnis durchzuführen;
wobei das Ausführungsmodul (14) speziell zu Folgendem ausgelegt ist: wenn das Bestimmungsergebnis derart ist, dass die Entsprechung zwischen der aktuellen Zeitperiode und der Netzwerkkennung der Netzwerknachricht, die in der aktuellen Zeitperiode empfangen wurde, mit der in der Datenbank gespeicherten Entsprechung nicht konform ist, Bestimmen durch Abfragen des Netzwerkservers, ob das mobile Endgerät auf den Netzwerkserver zugreifen kann, ob sich das mobile Endgerät in einem vorgebrachten Fehlzustand befindet, und
Durchführen des Antidiebstahlvorgangs, wenn sich das mobile Endgerät im vorgebrachten Fehlzustand befindet; oder
Durchführen einer Identitätsauthentifizierung für einen Halter des mobilen Endgeräts, wenn das mobile Endgerät nicht auf den Netzwerkserver zugreifen kann; und
Durchführen des Antidiebstahlvorgangs, wenn die Authentifizierung fehlschlägt;
wobei das Ausführungsmodul (14) ferner zu Folgendem ausgelegt ist: Speichern der Entsprechung zwischen der aktuellen Zeitperiode und der Netzwerkkennung der Netzwerknachricht, die in der aktuellen Zeitperiode empfangen wurde, in der Datenbank, wenn bestimmt wird, dass das mobile Endgerät nicht gestohlen wurde, wobei bestimmt wird, dass das mobile Endgerät nicht gestohlen wurde, wenn sich das mobile Endgerät nicht in einem vorgebrachten Fehlzustand befindet oder die Identitätsauthentifizierung des Halters des mobilen Endgeräts erfolgreich ist; und
Löschen von veralteten Informationen aus der Datenbank, wobei bestimmt wird, dass eine Entsprechung eine veraltete Information ist, wenn eine Differenz zwischen einem ersten Zeitpunkt und einem objektiven Zeitpunkt, der der aktuellen Zeitperiode entspricht, größer ist als ein voreingestellter Wert, wobei der erste Zeitpunkt der Zeitpunkt ist, zu dem die entsprechende Netzwerknachricht empfangen wurde.

8. Mobiles Endgerät nach Anspruch 7, wobei der Antidiebstahlvorgang mindestens einen der folgenden Vorgänge umfasst: Anzeigen von spezifizierten Informationen, Sperren des mobilen Endgeräts, Löschen oder Verschlüsseln von gespeicherten Benutzerdaten, Durchführen eines Positionierungsvorgangs oder Klingeln.

9. Mobiles Endgerät nach einem der Ansprüche 7 bis 8, wobei in der Datenbank ferner ein voreingestellter Vorgang gespeichert ist, der der in der Datenbank gespeicherten Entsprechung entspricht, und das Ausführungsmodul speziell zu Folgendem ausgelegt ist:
Durchführen des voreingestellten Vorgangs, wenn das Bestimmungsergebnis derart ist, dass die Entsprechung zwischen der aktuellen Zeitperiode und der Netzwerkkennung der Netzwerknachricht, die in der aktuellen Zeitperiode empfangen wurde, mit der in der Datenbank gespeicherten Entsprechung konform ist, wobei der voreingestellte Vorgang mit der in der Datenbank gespeicherten Entsprechung verknüpft ist.

## Revendications

1. Procédé de commande d'un terminal mobile, comprenant les étapes suivantes :
recevoir (S101, S201, S303), par un terminal mobile, au moins un message de réseau au cours d'une période de temps en cours, où l'au moins un message de réseau est envoyé par au moins un dispositif de réseau ;
obtenir (S102, S202, S304), par le terminal mobile en fonction du message de réseau reçu au cours de la période en cours, un identificateur de réseau du message de réseau reçu au cours de la période en cours ;
déterminer (S103, S203, S305), par le terminal mobile, si une correspondance entre la période de temps en cours et l'identificateur de réseau du message de réseau reçu dans la période de temps en cours est en accord avec une correspondance stockée dans une base de données, où la correspondance stockée dans la base de données comprend une correspondance entre une période de temps et un identificateur de réseau qui proviennent d'un message de réseau reçu par le terminal mobile avant la période de temps en cours ; et
exécuter (S104), par le terminal mobile, une opération de commande correspondante selon un résultat de détermination ;
avant l'exécution (S104), par le terminal mobile, d'une opération de commande correspondante selon un résultat de détermination, si la correspondance entre la période de temps en cours et l'identificateur de réseau du message de réseau reçu dans la période de temps en cours n'est pas en accord avec une correspondance stockée dans une base de données, le procédé comprenant en outre les étapes suivantes :
déterminer (S204, S306), par le terminal mobile, si le terminal mobile peut accéder à un serveur de réseau ;
déterminer (S205, S307), par le terminal mobile, si le terminal mobile est dans un état de réclamation manquant en interrogeant le serveur de réseau si le terminal mobile peut accéder au serveur de réseau, ou
exécuter (S206, S309), par le terminal mobile, une authentification d'identité pour un titulaire du terminal mobile et déterminer si un résultat de l'authentification d'identité est un échec si le terminal mobile ne peut accéder au serveur de réseau ;
exécuter (S207, S308), par le terminal mobile, une opération antivol, si le terminal mobile est dans un état de réclamation manquant, ou si le résultat de l'authentification d'identité est un échec ;
stocker (S209), par le terminal mobile, la correspondance entre la période de temps en cours et l'identificateur de réseau du message de réseau reçu dans la base de données au cours de la période de temps en cours, s'il est déterminé que le terminal mobile n'est pas volé, où le terminal mobile est déterminé comme n'étant pas volé si le terminal mobile n'est pas dans un état de réclamation manquant ou si l'authentification d'identité du détenteur du terminal mobile est effectuée avec succès ;
le procédé comprenant en outre l'étape suivante :
supprimer, par le terminal mobile, les informations obsolètes de la base de données, où une correspondance est déterminée comme une information obsolète si une différence entre un premier point temporel et un point temporel objectif correspondant à la période de temps en cours est supérieure à une valeur prédéfinie, où le premier point temporel est le point temporel auquel le message de réseau correspondant est reçu.

2. Procédé de commande selon la revendication 1, dans lequel le dispositif de réseau comprend une station de base de communication mobile et l'identificateur de réseau comprend une identité de cellule, Cell ID.

3. Procédé de commande selon la revendication 1 ou la revendication 2, dans lequel le dispositif de réseau comprend un dispositif de point d'accès Wi-Fi, et l'identificateur de réseau comprend un identificateur d'ensemble de service, SSID.

4. Procédé de commande selon l'une quelconque des revendications 1 à 3, dans lequel le dispositif de réseau comprend un dispositif d'appariement Bluetooth, et l'identificateur de réseau comprend l'identification du dispositif Bluetooth.

5. Procédé de commande selon l'une quelconque des revendications 1 à 4, dans lequel la base de données stocke en outre une opération prédéfinie correspondant à la correspondance stockée dans la base de données, et l'exécution (S104), par le terminal mobile, d'une opération de commande correspondante selon un résultat de détermination comprend l'étape suivante :
exécuter (S208), par le terminal mobile, l'opération prédéfinie si le résultat de détermination est que la correspondance entre la période de temps en cours et l'identificateur de réseau du message de réseau reçu dans la période de temps en cours est en accord avec la correspondance stockée dans la base de données, où l'opération prédéfinie est associée à la correspondance stockée dans la base de données.

6. Procédé de commande selon l'une quelconque des revendications 1 à 5, dans lequel la base de données stocke la correspondance entre la période de temps et l'identificateur de réseau d'une manière séquentielle dans le temps, ou la base de données stocke la correspondance entre la période de temps et l'identificateur de réseau suivant une manière de classification par identificateur de réseau.

7. Terminal mobile, comprenant :
un module de réception (11), configuré pour recevoir au moins un message de réseau dans une période de temps en cours, où l'au moins un message de réseau est envoyé par au moins un dispositif de réseau ;
un module d'obtention (12), configuré pour obtenir, en fonction du message de réseau reçu dans la période de temps en cours, un identificateur de réseau du message de réseau reçu dans la période de temps en cours ;
un module de détermination (13), configuré pour déterminer si une correspondance entre la période de temps en cours et l'identificateur de réseau du message de réseau reçu dans la période de temps en cours est en accord avec une correspondance stockée dans une base de données, où la correspondance stockée dans la base de données comprend une correspondance entre une période de temps et un identificateur de réseau qui proviennent d'un message de réseau reçu par le terminal mobile avant la période de temps en cours ; et
un module d'exécution (14), configuré pour exécuter une opération de commande correspondante selon un résultat de détermination ;
où le module d'exécution (14) est spécifiquement configuré pour : si le résultat de détermination est que la correspondance entre la période de temps en cours et l'identificateur de réseau du message de réseau reçu au cours de la période de temps en cours n'est pas en accord avec la correspondance stockée dans la base de données, déterminer si le terminal mobile peut accéder à un serveur de réseau, déterminer si le terminal mobile est dans un état de réclamation manquant en interrogeant le serveur de réseau si le terminal mobile peut accéder au serveur de réseau, et
exécuter l'opération antivol, si le terminal mobile est dans un état de réclamation manquant, ou
exécuter l'authentification d'identité pour un titulaire du terminal mobile si le terminal mobile ne peut accéder au serveur de réseau ; et
exécuter l'opération antivol en cas d'échec de l'authentification ;
où le module d'exécution (14) est en outre configuré pour : stocker, dans la base de données, la correspondance entre la période de temps en cours et l'identificateur de réseau du message de réseau reçu au cours de la période de temps en cours, s'il est déterminé que le terminal mobile n'est pas volé, où le terminal mobile est déterminé comme n'étant pas volé si le terminal mobile n'est pas dans un état de réclamation manquant ou si l'authentification d'identité du détenteur du terminal mobile est effectuée avec succès ; et supprimer les informations obsolètes de la base de données, où une correspondance est déterminée comme une information obsolète si une différence entre un premier point temporel et un point temporel objectif correspondant à la période de temps en cours est supérieure à une valeur prédéfinie, où le premier point temporel est le point temporel auquel le message de réseau correspondant est reçu.

8. Terminal mobile selon la revendication 7, dans lequel l'opération antivol comprend au moins l'une des opérations suivantes : afficher des informations spécifiées, verrouiller le terminal mobile, supprimer ou crypter des données utilisateur stockées, exécuter une opération de positionnement ou déclencher une sonnerie.

9. Terminal mobile selon l'une quelconque des revendications 7 à 8, dans lequel la base de données stocke en outre une opération prédéfinie correspondant à la correspondance stockée dans la base de données, et le module d'exécution est spécifiquement configuré pour :
exécuter l'opération prédéfinie si le résultat de détermination est que la correspondance entre la période de temps en cours et l'identificateur de réseau du message de réseau reçu dans la période de temps en cours est en accord avec la correspondance stockée dans la base de données, où l'opération prédéfinie est associée à la correspondance stockée dans la base de données.
